Europäisches Patentamt

European Patent Office

Office européen des brevets

(11) Veröffentlichungsnummer: **0 094 634**
A2

## (12) EUROPÄISCHE PATENTANMELDUNG

(21) Anmeldenummer: 83104714.7

(22) Anmeldetag: 13.05.83

(51) Int. Cl.³: **C 08 G 12/40**
C 08 G 12/12, C 08 G 12/32
C 08 L 61/32, C 08 L 61/24
C 08 L 61/28, C 08 K 5/43

(30) Priorität: 14.05.82 DE 3218231

(43) Veröffentlichungstag der Anmeldung:
23.11.83 Patentblatt 83/47

(84) Benannte Vertragsstaaten:
AT BE DE FR IT NL

(71) Anmelder: CASSELLA Aktiengesellschaft
Hanauer Landstrasse 526
D-6000 Frankfurt am Main 61(DE)

(72) Erfinder: Piesch, Steffen, Dr.
An der Heide 32
D-6370 Oberursel(DE)

(72) Erfinder: Dörries, Peter
Hansa-Allee 80
D-6000 Frankfurt/Main(DE)

(74) Vertreter: Urbach, Hans-Georg, Dr.
Hanauer Landstrasse 526
D-6000 Frankfurt am Main 61(DE)

(54) Diethanolaminsalz der Amidosulfonsäure als Härtungsbeschleuniger für Aminoplastharze.

(57) Zur Aushärtung von modifizierten Aminoplastharzen, die mindestens 3 Gew.%, bezogen auf Festharz, bekannter Modifizierungsmittel enthalten durch Hitzeeinwirkung in Gegenwart eines latenten Härters, wird als latenter Härter mit besonderem Vorteil Diethanolammoniumsulfamat eingesetzt.

EP 0 094 634 A2

Croydon Printing Company Ltd.

0094634
Ref. 3248
Dr. Va/lro

## Diethanolaminsalz der Amidosulfosäure als Härtungsbeschleuniger für Aminoplastharze

Die vorliegende Erfindung betrifft die Verwendung von Di-($\beta$-hydroxyethyl)ammoniumsulfamat (Diethanolamin-sulfamat) als Härtungsbeschleuniger bei der Verarbeitung von Aminoplastharzen.

Aminoplastharze im Sinne der Erfindung sind mono- oder niedermolekulare Kondensationsprodukte - auch häufig als Aminoplastvorkondensat bezeichnet - einer Amino-, Imino- oder Amidgruppen enthaltenden Komponente, eines sogenannten Aminoplastbildners, mit einer Carbonylverbindung und gegebenenfalls einem niederen Alkanol (vergleiche Ullmanns Enzyklopädie der technischen Chemie, 4. Auflage, Band 7 (1974), S. 403 bis 424). Aminoplastbildner, die zur Herstellung von Aminoplastharzen in Betracht kommen, sind:
Melamin, Harnstoff, Dicyandiamid, Thioharnstoff, substituierte Melamine, Acetoguanamin, Butyroguanamin, Ethylenharnstoff.

In der Technik bevorzugte Aminoplastbilner zur Herstellung von Aminoplastharzen sind Melamin und Harnstoff.

Carbonylverbindungen, die für die Umsetzung mit obigen Aminoplastbildnern eingesetzt werden können, sind beispielsweise Formaldehyd, Acetaldehyd, Isobutyraldehyd, Aceton, Methylethylketon und Diethylketon. Bevorzugt wird in der Technik Formaldehyd. Die technisch wichtigsten Aminoplaste werden durch Kondensation der genannten bevorzugten Komponenten Formaldehyd, Harnstoff und/oder Melamin hergestellt. Aminoplastharze im Sinne der vorliegenden Erfindung sind auch solche, die durch Einkondensieren von modifizierenden Komponenten oder durch nachträglichen Zusatz von Modifizierungsmitteln erhalten werden. Bekannte Modifizierungsmittel sind beispielsweise o/p-Toluolsulfonamid, Amidosulfonsäure und ihre Salze, Caprolactam, Glucose, Sorbit, Glykol, Diethylenglykol, Penta erythrit, Saccharose, Methylenbisformamid, Methylenbisacetamid; Carbamate, wie z.B. Methylcarbamat, Methoxyethylcarbamat, Salze der Malein- bzw. Fumaramidsäure.

Aminoplastharze werden in der Technik in vielfältiger
Weise weiterverarbeitet.

Beispielsweise werden mit Lösungen von Aminoplasttränkharzen Papiere oder Gewebe imprägniert, die zur Herstellung dekorativer Schichtpreßstoffplatten oder zur Beschichtung von Holzfaserplatten verwendet werden.

Zur Herstellung von Preßmassen wird das Aminoplastvorkondensat mit Füllstoffen, wie z.B. Cellulose oder Holzmehl,
gemischt. Aus diesen Preßmassen werden durch Pressen in
beheizten Formen Formteile aller Art, wie z.B. Gehäuse,
Bedienungsknöpfe, elektrische Schalter und vieles andere
hergestellt.

Bei der Verarbeitung von Aminoplasten erfolgt ein Übergang
der löslichen und schmelzbaren Aminoplastvorkondensate in
unschmelzbare und unlösliche Produkte. Bei diesem als Aushärtung bezeichneten Vorgang tritt eine durchgehende Vernetzung der Vorkondensate ein. Die Geschwindigkeit dieser
Vernetzungsreaktion ist jedoch auch bei den erhöhten Verarbeitungstemperaturen für anwendungstechnische Prozesse
zu gering und muß daher durch Zusätze von sogenannten
Härtern beschleunigt werden, und es ist in der Technik
gebräuchlich, die Härtung von Aminoplastharzen durch Zusatz von Säuren oder sauer reagierender und/oder säureabspaltender Verbindungen zu beschleunigen.

Besonders benötigt werden dabei sogenannte latente Härter,
nach deren Zusatz zum Aminoplastharz einerseits eine ausreichende Verarbeitungszeit bei Zimmertemperatur, andererseits eine möglichst kurze Härtungszeit bei den Verarbeitungstemperaturen von 100 bis 170°C erzielt werden.
Die Härter sollen hierbei keinen korrosiven Angriff an
den metallischen Werkstoffen der Verarbeitungswerkzeuge
zeigen.

Es ist bereits bekannt (Europäische Patentanmeldung 0 000 780), daß Aminsalze, insbesondere Alkanolaminsalze starker Säuren, als derartige latente Härter geeignet sind. Sie zeigen allerdings bei Zusatz zu Kohlenhydrate enthaltenden Aminoplastharzen den Nachteil, daß bei der Aushärtung Vergilbung auftritt.

Ferner ist aus der US-PS 3,487,048; US-PS 2,377,867; GB-PS 875 945 und GB-PS 1 027 725 die Verwendung von Sulfaminsäure, Zinksulfamat und Triethanolammoniumsulfamat als Härter für Aminoplastharze, insbesondere für duroplastische Formmassen bekannt. Zinksulfamat ist allerdings für Aminoplastflüssigharze wegen Harzausfällung nicht geeignet. Das Triethanolaminsalz der Sulfaminsäure hat nur eine geringe Härterwirksamkeit.

Die bisher bekannten latenten Härter weisen u.a. den Nachteil auf, daß ihre Wirksamkeit bei solchen Aminoplastharzen, die durch Zusätze von Modifizierungsmitteln in ihren Eigenschaften speziellen anwendungstechnischen Erfordernissen angepaßt wurden, insbesondere bei solchen, die stark elastifiziert wurden, noch zu wünschen übrig läßt.

Es wurde nun gefunden, daß das Diethanolaminsalz der Sulfaminsäure eine unerwartet hohe Härterwirksamkeit aufweist und daher sehr gut als Härtungsbeschleuniger bei der Weiterverarbeitung von Aminoplastharzen eingesetzt werden kann.

Die vorliegende Erfindung betrifft somit die Verwendung von Di-(ß-hydroxyethyl)ammoniumsulfamat(Diethanolaminsulfamat) als Härtungsbeschleuniger für Aminoplastharze. Auch bei Aminoplastharzen, die über 3 Gew.%, bezogen auf Festharz, von bekannten Modifizierungsmitteln, insbesondere Elastifizierungsmitteln, wie z.B. Diethylenglycol, Caprolactam, Sorbit oder p-Toluolsulfonamid enthalten, zeigt das Diethanolammoniumsulfamat noch eine sehr gute Wirksamkeit und ist in dieser Hinsicht überraschenderweise dem als Härter bereits bekannten Triethanolammoniumsulfamat erheblich überlegen. Besonders bevorzugt ist der Einsatz von Diethanolammoniumsulfamat als Härter für solche modifizierten Aminoplastharze, die ein Aminoplastbildner/ Formaldehydverhältnis von 1 : 1,4 bis 1 : 3,0, insbesondere von 1 : 1,6 bis 1 : 2,0 aufweisen und die auf der Basis von Melamin und Harnstoff, insbesondere Mischungen von Melamin mit bis zu 30 Gew.% Harnstoff und vorzugsweise von Melamin allein als Aminoplastbildner hergestellt sind.

Der erfindungsgemäß zu verwendende Härter zeigt bei guter Wirksamkeit keine Vergilbungserscheinungen bei der Härtung von kohlehydrathaltigen Aminoplastharzen und er hat keine korrosiven Eigenschaften.

Die erwähnten Vorteile treten bei der erfindungsgemäßen Verwendung des Diethanolaminsalzes der Amidosulfosäure auch dann auf, wenn dieses mit anderen bekannten salzartigen Härtern, wie z.B. Amin- bzw. Ammoniumsalzen mittelstarker bis starker Mineral- oder Carbonsäuren kombiniert wird. Besonders geeignet für eine solche Kombination ist der aus der DE-OS 29 11 265 bekannte latente Härter. Die Eigenschaften stellen sich hierbei gemäß dem jeweiligen Mischungsverhältnis ein.

Ein nicht zu unterschätzender anwendungstechnischer Vorteil des Einsatzes von Diethanolaminsulfamat besteht darin, daß dieses Produkt noch in einer Konzentration von 95 % flüssig und handhabbar ist. Es wird zweckmäßigerweise dem zu härtenden Aminoplastvorkondensat in dieser Form zugesetzt. Für spezielle Zwecke kann jedoch auch eine verdünntere Lösung in einem harzverträglichen Lösungs- oder Verdünnungsmittel, vorzugsweise in niederen Alkanolen und insbesondere in Wasser in entsprechender Menge eingesetzt werden.

Wie bereits oben ausgeführt, kann auch die Härtungsgeschwindigkeit speziell modifizierter Aminoplastharze erfindungsgemäß erhöht werden. Es ist daher auch möglich den erfindungsgemäßen Zusatz von Diethanolamin-sulfamat zu einem Aminoplastharz mit einer Nachmodifizierung zu verbinden. So kann der Zusatz von bekannten Weichmachern für Aminoplastzharz aus den Stoffklassen der mehrwertigen Alkohole, Zucker, Carbon- oder Sulfonamide zum erfindungsgemäß zu verwendenden Härter Vorteile für die damit hergestellten Endprodukte, insbesondere was Elastizität und Glanz betrifft, bewirken. Für diesen Zweck können Mischungen des Diethanolammoniumsulfamats mit 100 bis 500 Gew.% bekannter Modifizierungsmittel zugesetzt werden. Im Falle fester Modifizierungsmittel kann eine entsprechende wäßrige Lösung des Modifizierungsmittels zugemischt werden.

Als Aminoplastharze, deren Härtung durch den erfindungsgemäßen Zusatz beschleunigt werden kann, eignen sich alle in wäßriger oder wäßrig-alkoholischer Lösung vorliegenden bekannten Typen, insbesondere solche auf Basis von Formaldehyd-Umsetzungsprodukten des Harnstoffs, Melamins, Dicyandiamins, der Guanamine und der Mischungen dieser Harze untereinander sowie dieser Aminoplastharze mit anderen Harzen wie Phenolharzen und wasserlöslichen Polymeren. Besondere Bedeutung besitzt der erfindungsgemäße Zusatz von Diethanolammoniumsulfamat für die Härtung von Melamin-Formaldehyd-Harzen.

Die zur ausreichenden Beschleunigung der Härtung erforderliche Härtermenge beträgt 0,05 bis 3 Gew.%, vorzugsweise 0,2 bis 1,2 Gew.%, bezogen auf das Festharz.

Aminoplastharze und Aminoplastharze enthaltende Duroplastgemische, die bekannte Modifizierungsmittel in einer Menge von mindestens 3 Gew.% bezogen auf das Gewicht des Festharzes und gegebenenfalls Lösungs- und Verdünnungsmittel sowie evtl. übliche Härtungsbeschleuniger enthalten, sind, sofern sie 0,05 bis ———————————————

3 Gew.%, vorzugsweise O,2 bis 1,2 Gew.% Diethanolammoniumsulfamat enthalten, ebenfalls Gegenstand dieser Erfindung.

Bevorzugte erfindungsgemäße Aminoplastharze enthalten gemäß den obigen Angaben über 3 Gew.%, bezogen auf Festharz, eines oder mehrere der obengenannten Modifizierungsmittel, insbesondere der bevorzugten Modifizierungsmittel. Ferner sind solche erfindungsgemäßen Aminoplastharze bevorzugt, die auf der Basis von Melamin und Harnstoff, insbesondere Mischungen von Melamin mit bis zu 30 Gew.% Harnstoff und vorzugsweise von Melamin als alleinige. Aminoplastbildner hergestellt sind.

Die erfindungsgemäßen Aminoplast-Harze können für alle hierfür bereits bekannten Anwendungsgebiete eingesetzt werden, so z.B. als Spanplattenbinder, Tränkharze für Schichtstoffbahnen, Naßfestmittel für Papier, Textilhilfsmittel, Binder für Glasvliese, Oberflächenvergütungsmittel und Lacke.

Die Aushärtung der erfindungsgemäßen Harze erfolgt in üblicher Weise unter Hitzeeinwirkung. So können zum Beispiel unter Einsatz der erfindungsgemäßen Harze Oberflächenbeschichtete Holzwerkstoffe oder Spanplatten in den bei der Herstellung solcher Erzeugnisse benutzten Mehretagenpressen, aber auch nach dem kurztaktverfahren und in modernen Doppelbandpressen hergestellt werden.

Die folgenden Ausführungsbeispiele veranschaulichen den erfindungsgemäßen Einsatz von Diethanolammoniumsulfamat zur Härtungsbeschleunigung eines durch Modifizierungsmittel stark elastifizierten Melamin/Formaldehyd-Tränkharzes und eines handelsüblichen Harnstoff-Formaldehyd-Tränkharzes in Abmischung mit dem stark elastifizierten Melamin/Formaldehyd-Harz. Die Beispiele zeigen außerdem die Wirkung des nächstvergleichbaren bekannten Härtungsbeschleunigers, des Triethanolammoniumsulfamats.

Man erkennt, daß das erfindungsgemäß einzusetzende Diethanolammoniumsulfamat eine wesentlich höhere Härtungsbeschleunigung bewirkt als das bekannte Produkt.

## Anwendungsbeispiel 1

Einem handelsüblichen stark elastifizierten Melamin-Formaldehyd-Harz mit einem Melamin/Formaldehyd-Molverhältnis von 1 : 1,7 und einem Gehalt von 7 Gew.% Diethylenglycol und 3 Gew.% Sorbit als elastifizierende Modifizierungsmittel, in der Tabelle als Harz 1 bezeichnet, das in 50 %iger wäßriger Lösung vorliegt, werden 0,2; 0,4; 0,6; 0,8 und 1,0 %, bezogen auf 100 % Festharz einer 95 gew.%igen wäßrigen Lösung von Diethanolammoniumsulfamat zugesetzt und die Zeit bis zur Trübung und bis zur Härtung bei Eintauchen in ein siedendes Wasserbad gemessen. Ferner wird die Reaktivität des mit Härter versetzten Harzes bei 140°C im zugeschmolzenen Glasrohr in bekannter Weise bestimmt.

In gleicher Weise wird eine 50 gew.%ige wäßrige Lösung von Triethanolammoniumsulfamat geprüft und in Mengen von 0,2, 0,4, 0,6, 0,8 und 1,0 %, bezogen auf 100 % Festharz, eingesetzt. Die gefundenen Werte der Vergleichsversuche sind in der folgenden Tabelle aufgeführt.

## Anwendungsbeispiel 2

Arbeitet man, wie im Anwendungsbeispiel 1 angegeben, mit einem handelsüblichen Harnstoff-Formaldehydtränkharz (Molverhältnis 1 : 1,8) in Abmischung mit Harz I (Verhältnis 50 Gew. Tl. elastifiziertes 55 %iges Melamin-Formaldehyd-Tränkharz und 50 Gew.Tl. 55 %iges Harnstoff-Formaldehyd-Tränkharz), werden die unter Harz II in der Tabelle aufgeführten Werte erzielt.

Tabelle  -  Härterwirksamkeitsprüfungen

| Harz | Härter | Trübungs- und Härtungszeit bei 100° C | Trübungszeit beim Reaktivitäts-Test bei 140° C |
|---|---|---|---|

**Beispiel 1**

| Harz | Härter | Trübungs- und Härtungszeit bei 100° C | Trübungszeit beim Reaktivitäts-Test bei 140° C |
|---|---|---|---|
| Harz I | ohne Zusatz | 170/210 min | -- |
| Harz I | + 0,2% Diethanol-ammoniumsulfamat | 12'/14' | 101 sec. |
| Harz I | + 0,4% " | 7'20"/8'50" | 78 sec. |
| Harz I | + 0,6% " | 6' /7'30" | 70 sec. |
| Harz I | + 0,8% " | 5' /6'10" | 65 sec. |
| Harz I | + 1,0% " | 4'40"/5'40" | 60 sec. |
| Harz I | + 0,2% Triethanol-ammoniumsulfamat | 20'/25' | 140 sec. |
| Harz I | + 0,4% " | 15'/19' | 120 sec. |
| Harz I | + 0,6% " | 10'/14' | 115 sec. |
| Harz I | + 0,8% " | 9'/12' | 95 sec. |
| Harz I | + 1,0% " | 8'/10' | 90 sec. |

**Beispiel 2**

| Harz | Härter | Trübungs- und Härtungszeit bei 100° C | Trübungszeit beim Reaktivitäts-Test bei 140° C |
|---|---|---|---|
| Harz II | ohne Zusatz | 180 min | nicht meßbar |
| Harz II | + 0,2% Diethanol-ammoniumsulfamat | 12 min | |
| Harz II | + 0,4% " | 8 min | |
| Harz II | + 0,6% " | 7 min | |
| Harz II | + 0,8% " | 6 min | |
| Harz II | + 1,0% " | 5 min | |
| Harz II | + 0,2% Triethanol-ammoniumsulfamat | 25 min | |
| Harz II | + 0,4% " | 16 min | |
| Harz II | + 0,6% " | 12 min | |
| Harz II | + 0,8% " | 10 min | |
| Harz II | + 1,0% " | 9 min | |

Die bei obigen Vergleichsversuchen eingesetzten Härtungsbeschleuniger können wie folgt hergestellt werden:

<u>Diethanolammoniumsulfamat:</u>

27,5 kg Diethanolamin werden vorgelegt und bei einer Innentemperatur von 60°C (die während der Reaktion auf 80-100°C steigen darf) 27,5 kg Amidosulfosäure eingetragen.

Es entsteht eine viskose Lösung, die auch nach langem Stehen bei 10°C nicht zur Kristallisation neigt. Eine Probe im Verhältnis 1 : 1 in Wasser gelöst ist farblos und hat einen pH von 6,9 ($\pm$ 0,2).

Die Viskose Substanz wird in vorliegender Form als Härter für Melaminharze verwendet.

<u>Triethanolammoniumsulfamat:</u>

In 300 g Triethanolamin werden unter gleichen Bedingungen wie oben 194 g Amidosulfosäure eingetragen. Man erhält eine klare "Schmelze", die bei 20°C erstarrt. Sie muß mit Wasser auf 50% verdünnt werden, um handhabbar zu sein.

0094634
Ref. 3248

Patentansprüche

1. Verfahren zum Aushärten von modifizierten Aminoplastharzen, die mindestens 3 Gew.%, bezogen auf Festharz,
bekannter Modifizierungsmittel enthalten durch Hitzeeinwirkung in Gegenwart eines latenten Härters, dadurch gekennzeichnet, daß als latenter Härter Diethanolammoniumsulfamat eingesetzt wird.

2. Verfahren nach Anspruch 1 zur Aushärtung von Aminoplast
harzen, dadurch gekennzeichnet, daß ein Aminoplastharz
mit einem Aminoplast/Formaldehyd-Verhältnis vom 1 : 1,4
bis 1 : 3 und Diethanolammoniumsulfamat als latenter Härter eingesetzt wird.

3. Verfahren nach den Ansprüchen 1 und 2 zur Aushärtung
von Aminoplastharzen, dadurch gekennzeichnet, daß ein Aminoplastharz auf der Basis von Melamin und/oder Harnstoff
als Aminoplastbildner und Diethanolammoniumsulfamat als
latenter Härter eingesetzt wird.

4. Verfahren nach den Ansprüchen 1 bis 3 zur Aushärtung
von Aminoplastharzen, dadurch gekennzeichnet, daß das
Diethanolammoniumsulfamat in einer Menge von 0,05 bis
3 Gew.%, bezogen auf Festharz, eingesetzt wird.

5. Modifizierte Aminoplastharze, die mindestens 3 Gew.%,
bezogen auf Festharz, bekannter Modifizierungsmittel und
gegebenenfalls Lösungs- und Verdünnungsmittel sowie evtl.
übliche Härtungsbeschleuniger enthalten, dadurch gegenzeichnet, daß sie 0,05 bis 3 Gew.%, bezogen auf Festharz,
Diethanolammoniumsulfamat enthalten.

6. Modifizierter Aminoplast gemäß Anspruch 5, dadurch
gekennzeichnet, daß er ein Aminoplast/Formaldehyd-Verhältnis von 1 : 1,4 bis 1 : 3 aufweist.

7. Modifizierter Aminoplast gemäß den Ansprüchen 5 und 6, dadurch gekennzeichnet, daß er auf Basis von Melamin und/oder Harnstoff hergestellt worden ist.

8. Verwendung von Diethanolammoniumsulfamat als latenter Härter für modifizierte Aminoplastharze die mindestens 3 Gew.%, bezogen auf Festharz, bekannter Modifizierungsmittel enthalten.

9. Verwendung von Diethanolammoniumsulfamat gemäß Anspruch 8, dadurch gekennzeichnet, daß dieses in einer Menge von 0,05 bis 3 Gew.% bezogen auf Festharz, eingesetzt wird.